(19) Europäisches Patentamt
European Patent Office
Office européen des brevets

(11) EP 0 506 267 B1

(12) EUROPEAN PATENT SPECIFICATION

(45) Date of publication and mention
of the grant of the patent:
**26.06.1996 Bulletin 1996/26**

(51) Int Cl.$^6$: **C08J 9/20**, C08J 9/14,
B22C 7/02
// C08L25/14

(21) Application number: **92302205.7**

(22) Date of filing: **13.03.1992**

(54) **Resin composition for making expanded thermoplastics patterns, patterns produced therefrom and their use in metal casting**

Harzzusammensetzung zur Herstellung thermoplastischer verlorener Modelle, diese Modelle und deren Verwendung beim Metallguss

Composition de résine pour la fabrication de modèles perdus thermoplastiques, ces modèles et leur utilisation pour la coulée de metaux

(84) Designated Contracting States:
**DE ES FR GB IT NL SE**

(30) Priority: **20.03.1991 JP 56412/91**
**26.08.1991 JP 213580/91**
**29.01.1992 JP 13512/92**

(43) Date of publication of application:
**30.09.1992 Bulletin 1992/40**

(73) Proprietors:
• **FOSECO INTERNATIONAL LIMITED**
**Nechells Birmingham B7 5JR (GB)**
• **Hitachi Chemical Co., Ltd.**
**Shinjuku-ku, Tokyo 163 (JP)**

(72) Inventors:
• **Kato, Yoshiyuki**
**Ichihara-shi, Chiba-ken (JP)**
• **Shibata, Hideaki**
**Chiba-shi, Chiba-ken (JP)**
• **Simmons, William**
**Northfield, Birmingham, B31 2BB (GB)**
• **Graham, Nigel Keith**
**Near Tamworth, Staffordshire B78 2JP (GB)**

(74) Representative: **Eyles, Winifred Joyce**
**Burmah Castrol**
**Group Patents Department**
**Burmah Castrol House**
**Pipers Way**
**Swindon, Wiltshire SN3 1RE (GB)**

(56) References cited:
**FR-A- 2 289 553          JP-A-56 112 944**

• **WORLD PATENTS INDEX LATEST Week 0290, Derwent Publications Ltd., London, GB; AN 90-011660 & JP-A-1 292 040**
• **WORLD PATENTS INDEX LATEST Week 1785, Derwent Publications Ltd., London, GB; AN 85-102046 & JP-A-60 047 037**
• **PATENT ABSTRACTS OF JAPAN vol. 10, no. 25 (M-450)31 January 1986 ( YUKA BAADEITSUSHIE KK ) 19 September 1985 & JP-A-60 184 447**
• **WORLD PATENTS INDEX Week 1974, Derwent Publications Ltd., London, GB; AN 74- 35258V & JP-B-50 040 160**

## Description

This invention relates to a resin composition for making expanded thermoplastics metal casting patterns, patterns produced from the resin composition, and the use of the patterns in metal casting.

Patterns of expanded thermoplastic material, such as expanded polystyrene, are used in the so-called Full Mould or Lost Foam process of casting molten metal. One or more such patterns, corresponding to the metal casting to be produced and to the sprue, and mould runner system are coated with a refractory coating and surrounded with unbonded sand in a moulding box to form a mould. When a molten metal is poured into the mould the pattern is decomposed and replaced by the metal which solidifies to produce a casting having the shape and configuration of the pattern.

The expanded polystyrene pattern which is used in the process is commonly produced by partially expanding polystyrene beads containing a volatile blowing agent such as pentane under the action of heat and ageing the beads, injecting the partially expanded beads into a mould, usually made of metal, such as aluminium and then further expanding the beads under the action of heat in the mould so causing the beads to fuse together to form the pattern. Usually heating in the mould is done by injecting steam into the mass of partially expanded beads.

It is well known that when expanded polystyrene patterns are used in the Full mould and similar processes, defects can arise in the castings produced due to incomplete vaporisation or decomposition of the pattern. The defects, which are termed carbon defects, are most noticeable in iron castings and take the form of wrinkling, cold laps, surface pits and sub-surface inclusions due, it is believed, to the presence in the mould of tar-like products of the thermal degradation of the polystyrene.

There have been a number of proposals involving the use of additives to the patterns for alleviating the problem of carbon defects associated with expanded polystyrene patterns. Japanese Patent Publication no. 40-24146 describes the use of ammonium perchlorate as an additive to the pattern, Japanese Patent Publication no. 41-16925 describes the use of a depolymerisation catalyst, and British Patent Application no. 2193666A describes the use of an oxidising agent such as iron oxide or manganese dioxide which will oxidize the carbon to carbon dioxide and /or carbon monoxide.

However these proposals have the drawback that they make production of the patterns more difficult and their effect in overcoming the carbon defect problem is not proportionally great.

Therefore there have been other proposals to use polymers other than polystyrene for the expandable plastics pattern. United States Patents no. 4790367 and no. 4983640 describe the use of patterns made from an alkyl acrylate polymer such as polymethyl methacrylate. However, when a methyl methacrylate polymer is used, it is not possible to effect thorough impregnation with a blowing agent and the extent of expansion of the expanded grains is low. There is also the drawback that the mouldability is inferior and the mechanical strength and surface quality of moulded products are poor. During casting the polymethyl methacrylate rapidly evolves large amounts of gas and this can cause splashing and also result in the casting having poor surface finish.

Attempts have been made to produce patterns from a blend of partially expanded polystyrene and partially expanded polymethyl methacrylate, but a number of problems arise in the production and use of such patterns. It is necessary to pre-expand the two materials separately and on mixing it is difficult to produce a homogeneous mixture. Static electricity makes mould filling difficult, and because the optimum conditions of pressure and temperature for moulding polystyrene are different from those for polymethyl methacrylate, it is necessary to effect a compromise in the conditions. The resulting patterns are of non-uniform density and because the polystyrene and polymethyl methacrylate beads only fuse to themselves and not to each other, the patterns are weak. Furthermore the patterns have a poor surface finish.

Japanese Patent Publication no. 49-23458 describes an expanded pattern in which isobutyl methacrylate, which has good thermal decomposition characteristics, is made the main component and methyl methacrylate is used as a copolymerisation component and also proposes an expanded pattern which has methyl methacrylate as the main component.

The abovenoted expanded patterns for which isobutyl methacrylate is used as the main component and methyl methacrylate is used as a copolymerisation component have the drawback that their glass transition temperature is very much lower than that of polystyrene expanded patterns and if pre-expansion and moulding tools that are used for expanded polystyrene bodies are used there is considerable shrinkage of the expanded patterns thus giving dimensional errors in the castings. It may therefore be necessary to use different moulding tools and to alter the moulding conditions for example the temperature and pressure.

A method of copolymerising 80 - 95 wt% of methyl methacrylate and 5 - 20 wt% of styrene was therefore proposed in the disclosure of Japanese Patent Publication No. 51-24307 with the object of improving expansion characteristics. Also, a method of effecting copolymerisation with addition of $\alpha$-methylstyrene as a supplementary component at the time of methyl methacrylate polymerization was proposed in the disclosure of Japanese Patent Publication No. 50-40160. Further, the use of a methyl methacrylate and $\alpha$-methylstyrene copolymer expanded body is described in the disclosure of Japanese Patent Publication No. 60-184447.

With expanded patterns for which methyl methacrylate is made the main component and styrene or $\alpha$-methylsty-

rene is used as a copolymerisation component, there is similarly the drawback of considerable shrinkage of pre-expanded beads and of moulded patterns and it is difficult to achieve both an increase in the extent of pre-expansion and a reduction of shrinkage at the time of moulding. Such patterns also still tend to evolve excessive gas and to produce castings of inferior surface finish.

The present invention resolves these problems by providing an expandable resin composition which can readily be polymerised from its monomers, which has excellent pre-expansion and moulding characteristics and which produces insignificant quantities of carbonaceous residues during casting, and excellent casting surface finish.

According to the invention there is provided an expandable resin composition produced by impregnating a copolymer, of weight average molecular weight 150, 000 to 350, 000, produced by copolymerisation of 55 - 85% by weight of styrene monomer and 15 - 45% by weight of a methacrylic acid ester monomer having the general formula $CH_2 = C(CH_3) COOR$ (where R represents a 1 - 4 carbon atom alkyl group), with a volatile blowing agent in an amount of up to 10% by weight based on the total weight of monomers.

According to a further feature of the invention there is provided an expanded thermoplastics pattern for metal casting formed by expanding and forming to a desired shape the resin composition defined above.

Such a pattern can be produced by pre-expanding beads of the expandable resin composition and allowing them to age, introducing the pre-expanded beads into a mould having an internal shape conforming to the shape of the pattern until the mould is filled, and heating the mixture so as to further expand and fuse the beads and form the pattern.

According to yet a further feature of the invention there is provided a method of producing a metal casting comprising surrounding an expanded thermoplastics pattern produced from the expandable resin composition defined above with particulate refractory material, and pouring molten metal on to the pattern so as to degrade the pattern and form the casting on solidification of the metal as a replica of the pattern.

Preferably the pattern is coated with a refractory coating.

In the methacrylic acid ester component of the copolymer R may be for example, a methyl, ethyl, n-propyl, isopropyl, n-butyl, sec-butyl, tert-butyl or iso-butyl group.

The copolymer constituting the main component in the expandable resin composition of the invention is a copolymer that is produced by copolymerising 55 - 85 wt%, preferably 60 - 80 wt%, of styrene and 15 - 45 wt%, preferably 20 - 40 wt%, of a methacrylic acid ester represented by the general formula $CH_2 =C(CH_3) COOR$. If there is more than 85 wt% of styrene and the material is used as an expendable pattern, the degree of decomposition of the resin composition at the time of casting falls, there is production of carbonaceous residues and the casting skin is fouled. On the other hand, if the amount of the methacrylic acid ester exceeds 45%, there is the drawback that the degree of pre-expansion falls and there is a great degree of contraction at the time of moulding.

In the invention, the weight-average molecular weight ($M_w$) of the copolymer is controlled in the range 150,000 - 350,000. If the weight-average molecular weight exceeds 350,000, although the strength of the copolymer as a matrix is higher there is failure to achieve satisfactory expansion and moulding fusion in the steam heating conditions of normal expansion and moulding. A weight-average molecular weight of less than 150,000 can result in blocking at the time of expansion and surface skin dissolution (in so-called keratoidal form) in high temperature portions of the mould at the time of mould processing.

The abovenoted copolymer can be produced by any method such as solution polymerisation, emulsification polymerisation or suspension polymerisation.

An organic peroxide such as, e.g., lauroyl peroxide, benzoyl peroxide, t-butylperoxy (2-ethylhexanoate), t-butylperoxybenzoate, t-butylperoxypivalate or a similar mono-functional organic peroxide or 1, 1-di-t-butylperoxy-3, 3, 5-trimethylcyclohexane , di-t-butylperoxyhexahydroterephthalate, di-t-butylperoxytrimethyladipate, di-t-butylperoxyisophthalate or a similar bifunctional organic peroxide or an azo compound such as azobisisobutyronitrile or azobisdimethylvaleronitrile can serve as a poymerisation initiator that is used in polymerisation of the copolymer.

It does not matter whether a polymerisation initiator as noted above is added before the monomers are added to the polymerisation vessel or is added after the monomers are added or is added together with the monomers. It is satisfactory if the polymerisation initiator is so adjusted that the weight-average molecular weight of the copolymer produced is 150,000 - 350,000 and preferably an amount that is 0.1 - 2 wt% relative to the total amount of monomers is used.

It is also possible to use n-dodecylmercaptan, n-octylmercaptan, n-butylmercaptan, or tert-butylmercaptan, in order to adjust the molecular weight of the copolymer. The amount of such substances is preferably $\leq 1$ mol% relative to the monomers.

The polymerisation temperature can be suitably selected in the range 0 - 200°C.

Pentane, which constitutes a readily-volatizable organic compound that is liquid at normal pressure and temperature and does not dissolve the abovenoted copolymer, can be used as a volatile blowing agent for the expandable resin composition of the invention. The pentane used may be for example n-pentane, iso-pentane, neopentane or cyclopentane. For efficiency and for economic reasons iso-pentane is preferred. The amount of pentane present is up to 10 wt%, preferably 1 - 10 wt%, relative to the total weight of monomers. Outside this range it is not possible to produce a good expanded pattern.

In the invention, it is possible to make joint use of readily-volatizable organic compounds other than pentane that are liquids or gases at normal pressure and temperature and do not dissolve the copolymer. Examples of such compounds include aliphatic hydrocarbons such as propane, butane, hexane and petroleum ether, alicyclic hydrocarbons such as cyclohexane, and aliphatic hydrocarbon halides such as methylene chloride, trichlorotrifluoroethane and dichlorodifluoroethane. The blowing agents other then pentane are used in an amount such that the amount of blowing agent does not exceed 10% by weight relative to the total weight of monomers.

If suspension polymerisation is employed as the polymer manufacturing method, the polymer can be impregnated with the blowing agent by adding the blowing agent, preferably introducing it under pressure, in the latter half of polymerisation. What is meant here by "the latter half of polymerisation" is the time when the polymerisation conversion ratio is ≥ 50 wt%, preferably ≥ 70 wt%. Alternatively beads of the copolymer in the shape of spheres or pellets may be suspended in an aqueous medium and the blowing agent added to this medium, impregnation preferably being effected at 20 - 130°C. In yet another procedure, the copolymer and the blowing agent may be melted and mixed together and the expandable resin composition formed for example by extrusion.

A plasticiser can be added at the time of impregnation of the copolymer with the blowing agent. An organic solvent that can dissolve the copolymer or cause it to swell can be used as a plasticiser. Materials whose boiling point is ≤ 150°C and is about 10°C or more lower than the softening point of the copolymer are preferred. Plasticisers include aromatic hydrocarbons such as ethylbenzene, toluene, styrene and xylene and hydrocarbon halides such as 1, 2-dichloropropane, trichloroethylene and perchloroethylene. Preferably up to 5 wt% of plasticiser relative to the copolymer is used.

Known additives such as antistatic agents may be included in the expandable resin composition of the invention.

Styrene resin pre-expansion and moulding methods that are widely employed industrially may be used without modification for pre-expansion and moulding of the expandable resin composition of the invention. Pre-expansion can be effected by heating by steam or a gas at normal pressure or with application of pressure or under reduced pressure. For example, if the resin is in the form of beads, an expanded moulded product can be obtained by pre-expansion by steam followed by further steam expansion in a mould. Alternatively, an expanded moulded product can be obtained by using an extrusion and expansion machine.

Any ratio from a low ratio to a high ratio can be selected for the extent of pre-expansion of the expandable resin composition of the invention.

An expendable pattern can be produced from the abovenoted expandable resin composition obtained by methods such as described above. The expendable pattern produced is used in an expendable pattern casting method comprising a stage in which the pattern which is preferably coated with a refractory coating is surrounded by sand, molten metal is poured in, the expendable pattern is degraded and eliminated by the heat of the molten metal and the molten metal replaces the eliminated pattern, thereby producing a casting.

The refractory coating which is used to coat the pattern may be applied for example by dipping the pattern in a refractory coating composition or by spraying or pouring the refractory coating composition on to the pattern.

Examples of suitable refractory coating compositions include those sold under the trade marks STYROMOL and HOLCOTE (manufactured by Foseco companies), EPICO K-124, EPICO K-125 and EPICO K-127 (manufactured by Kobe Rikagaku Kogyo KK), OKA SUPER 2500, OKA SUPER 2510, OKA SUPER 2700, OKA SUPER 2600, OKA SUPER 2600S, OKA PAINT 319, OKA PAINT 210 AND OKA PAINT 101 (manufactured by Okazaki Sangyo KK), STYROKOTE 270 and STYROKOTE 380PM (manufactured by KUROSU KK) and HARD MIX VF20 (manufactured by Tsuchiyoshi KK).

The sand which is used to surround the pattern may be for example silica sand, chromite sand, zircon sand or alumina.

The usual casting procedures used in casting processes involving the use of expanded plastic patterns may be used.

The following examples will serve to illustrate the invention. In all the examples "parts" and "%" are on a weight basis.

EXAMPLES 1 - 7 AND COMPARISON EXAMPLES 1 - 8

Lauroyl peroxide, benzoyl peroxide and t-butylperoxy-benzoate and a molecular weight modifier constituted by n-octylmercaptan were dissolved in monomers and mixed solutions of monomers in the proportions noted in Tables 1 and 2. Each solution was added, with stirring at 270 rpm, to an aqueous solution in which 5 g of tricalcium phosphate, 6 g of a 0.5% aqueous solution of sodium dodecylbenzenesulphonate and 0.5 g of sodium sulphate were dissolved in 1500 g of water in a 3 litre autoclave and the atmosphere in the autoclave was replaced by nitrogen. Next, the temperature was raised to 80°C and then the materials were stirred for 5 hours at this temperature. After this, the material was cooled and the expandable polymer grains were taken out, washed with hydrochloric acid, washed with water,

4

dewatered and dried.

The average grain diameters and the total amounts of volatile components in the expandable polymer grains produced were measured and are shown in Tables 1 and 2. For the average grain diameter grains produced by polymerisation were screened to their respective grain diameters, curves plotting the cumulative weights of the screened grains with the various grain diameters, going successively from the small-diameter grains, were prepared and the weight average grain diameter was given as the grain diameter representing 50% of the cumulative weight. For the total amount of volatile matter as a percentage of the total, a 2 g sample was put into an aluminium dish and heated for 10 minutes at 180°C, the weights were determined and the amount (X) as a percentage by weight of the total is given as

$$X = \frac{[(\text{sample weight before heating}) - (\text{sample weight after heating})]}{\text{sample weight}} \times 100$$

Pre-expanded grains were produced by immersing the resulting expandable polymer grains in boiling water and heating for the times noted in Tables 1 and 2. The specific volumes of the pre-expanded grains were measured and are noted in Tables 1 and 2. For the specific volume, pre-expanded grains were packed in a tube with a capacity of 1000 ml, the weight was determined and the specific volume was given as volume/weight.

Shrinkage (y) of the pre-expanded grains as a % was determined from the formula

$$y = \frac{a - b}{a} \times 100$$

where a is the volume (ml) after recovery (24 hours after pre-expansion) and b is the volume (ml) immediately after pre-expansion and is indicated in Tables 1 and 2.

The pre-expanded grains were aged for 24 hours in air at 25°C, put into a metal mould for moulding 190 mm x 120 mm x 10 mm thick boards, and heated for the times noted in Tables 1 and 2 by 1.0 kg/cm$^2$.G (120°C) steam in a table type autoclave to produce moulded patterns.

After macroscopic assessment of the surface smoothness and of the occurrence or non-occurrence of shrinkage of the expanded mouldings produced, the patterns were ignited and assessments of the production of black smoke and soot were made. The findings of these assessments are noted in Tables 1 and 2.

In order to determine the shrinkage of the patterns, expandable polymer grains were separately pre-expanded to a density of 0.020 - 0.021 g/cm$^3$ in a normal pressure steam batch type expansion unit. Using a reduced - pressure cooling type moulding machine (Daiya VS-300 manufactured by Daisen Kogyo KK) the pre-expanded grains were matured for 24 hours in air at 25°C and were moulded to a box-shaped moulding with a wall thickness of 50 mm and a size that was 552 mm lengthways x 335 mm across x 150 mm high in the conditions VS preheating : 3 seconds, heating 1 : 3 seconds, heating 2 : 7 seconds, water cooling : 10 seconds, free cooling : 300 seconds, steam pressure : 0.8 kgf/cm$^2$. The wall thickness of the mouldings was measured immediately after moulding, and relative to the forming mould dimension (50 mm) was within +2 - 0% (51 - 50 mm), and the moulding whose cooling conditions had not been excessive or insufficient were dried for 24 hours at 40°C.

The shrinkage $Y^1$ as a % was calculated from the formula

$$y^1 = \frac{a^1 - b^1}{a^1} \times 100$$

where $a^1$ is the mould dimension (length 552mm) and $b^1$ is the mould dimension (mm) after 24 hours, and is indicated in Tables 1 and 2.

TABLE 1

| | EXAMPLE | | | | | | |
|---|---|---|---|---|---|---|---|
| | 1 | 2 | 3 | 4 | 5 | 6 | 7 |
| CONTENT (g) | | | | | | | |
| STYRENE | 750 | 600 | 800 | 800 | 600 | 700 | 650 |
| METHYL METHACRYLATE | 250 | 400 | - | - | 400 | 300 | 100 |
| ETHYL METHACRYLATE | - | - | 200 | - | - | - | 250 |
| BUTYL METHACRYLATE | - | - | - | 200 | - | - | - |
| LAUROYL PEROXIDE | 2 | 2 | 2 | 2 | 5 | 2 | 3 |
| BENZOYL PEROXIDE | 2 | 2 | 2.5 | 2.5 | 3 | 2 | 4 |
| T-BUTYLPEROXYBENZOATE | 1 | 1 | 1 | 1 | 2 | 1 | 1.5 |
| N-OCTYLMERCAPTAN | 1 | 1.5 | 0.5 | 0.5 | 3 | 0.5 | 2 |
| PENTANE | 100 | 80 | 20 | 40 | 90 | 60 | 100 |

TABLE 1 (continued)

| | EXAMPLE | | | | | | |
|---|---|---|---|---|---|---|---|
| | 1 | 2 | 3 | 4 | 5 | 6 | 7 |
| CONTENT (g) | | | | | | | |
| TOLUENE | - | - | - | - | - | 5 | - |
| BUTANE | - | - | 80 | 60 | - | 30 | - |
| CHARACTERISTICS | | | | | | | |
| EXPANDABLE RESIN | | | | | | | |
| MOLECULAR WEIGHT (X $10^4$) | 29.6 | 26.5 | 34.1 | 32.6 | 17.2 | 25.4 | 20.7 |
| AVERAGE GRAIN DIAMETER (mm) | 0.61 | 0.54 | 0.47 | 0.65 | 0.44 | 0.41 | 0.62 |
| VOLATILE CONTENT (%) | 8.1 | 6.7 | 6.2 | 6.9 | 6.5 | 6.2 | 7.1 |
| PENTANE CONTENT (%) | 7.7 | 6.4 | 1.6 | 3.6 | 5.9 | 5.6 | 6.7 |
| PRE-EXPANSION | | | | | | | |
| HEATING TIME (MINUTES) | 1 | 2 | 2 | 1 | 1 | 2 | 1 |
| SPECIFIC VOLUME (ml/g) | 47 | 41 | 45 | 45 | 46 | 50 | 49 |
| MACROSCOPIC SHRINKAGE | A | A | A | A | A | A | A |
| EXPANDED GRAIN SHRINKAGE (%) | 1.5 | 2.2 | 1.7 | 2.6 | 2.7 | 0.9 | 2.5 |
| MOULDED PATTERN | | | | | | | |
| HEATING TIME (MINUTES) | 1 | 2 | 2 | 2 | 1 | 2 | 1 |
| SPECIFIC VOLUME (ml/g) | 61 | 54 | 58 | 58 | 60 | 64 | 62 |
| MACROSCOPIC SHRINKAGE | A | A | A | A | A | A | A |
| MOULDED PATTERN SHRINKAGE (%) | 0.3 | 0.3 | 0.4 | 0.4 | 0.3 | 0.3 | 0.4 |
| SURFACE SMOOTHNESS | D | D | D | D | D | D | D |
| BLACK SMOKE / SOOT PRODUCTION | A | A | A | A | A | A | A |

TABLE 2

| | COMPARISON EXAMPLE | | | | | | | |
|---|---|---|---|---|---|---|---|---|
| | 1 | 2 | 3 | 4 | 5 | 6 | 7 | 8 |
| CONTENT (g) | | | | | | | | |
| STYRENE | 1000 | - | 700 | 700 | 700 | 700 | 900 | 500 |
| METHYL METHACRYLATE | - | 1000 | 300 | 300 | 300 | 300 | 100 | 500 |
| ETHYL METHACRYLATE | - | - | - | - | - | - | - | - |
| BUTYL METHACRYLATE | - | - | - | - | - | - | - | - |
| LAUROYL PEROXIDE | - | 5 | 1.5 | - | 2 | 2 | 2 | 2 |
| BENZOYL PEROXIDE | 2.5 | - | 2 | 3 | 2 | 2 | 2 | 2 |
| T-BUTYLPEROXYBENZOATE | 1 | 0.5 | 1 | 1 | 1 | 1 | 1 | 1 |
| N-OCTYLMERCAPTAN | - | 2 | 1 | 4 | 1.5 | 1.5 | - | 1 |
| PENTANE | 80 | 90 | 100 | 80 | 150 | 5 | 100 | 100 |
| TOLUENE | - | - | 10 | - | - | - | - | - |
| BUTANE | - | - | - | - | - | 100 | - | - |
| CHARACTERISTICS | | | | | | | | |
| EXPANDABLE RESIN | | | | | | | | |
| MOLECULAR WEIGHT (x $10^4$) | 24.2 | 16.2 | 36.7 | 14.1 | 28.2 | 28.5 | 27.4 | 26.2 |
| AVERAGE GRAIN DIAMETER | 0.51 | 0.57 | 0.62 | 0.52 | 0.49 | 0.53 | 0.57 | 0.55 |
| VOLATILE CONTENT (%) | 6.9 | 7.6 | 8.2 | 7.2 | 11.4 | 7.4 | 7.9 | 8.0 |
| PENTANE CONTENT (%) | 6.6 | 7.2 | 6.8 | 6.7 | 11.4 | 0.4 | 7.5 | 7.6 |
| PRE-EXPANSION | | | | | | | | |
| HEATING TIME (MINUTES) | 1 | 1 | 3 | 0.5 | 0.5 | 3 | 1 | 1 |
| SPECIFIC VOLUME (ml/g) | 52 | 47 | 36 | 51 | 47 | 46 | 50 | 44 |
| MACROSCOPIC SHRINKAGE | A | B | A | B | B | A | A | C |
| EXPANDED GRAIN SHRINKAGE (%) | 1.2 | 1.7 | 1.5 | 6.2 | 5.7 | 1.4 | 1.1 | 4.1 |
| MOULDED PATTERN | | | | | | | | |
| HEATING TIME (MINUTES) | 1 | 1 | 3 | 1 | 1 | 3 | 1 | 1 |
| SPECIFIC VOLUME (ml/g) | 68 | 57 | 58 | 66 | 57 | 55 | 64 | 57 |
| MACROSCOPIC SHRINKAGE | A | B | A | B | B | A | A | C |
| MOULDED PATTERN SHRINKAGE (%) | 0.6 | 1.9 | 0.3 | 1.8 | 1.6 | 0.3 | 0.3 | 0.5 |

TABLE 2 (continued)

| | COMPARISON EXAMPLE | | | | | | | |
|---|---|---|---|---|---|---|---|---|
| | 1 | 2 | 3 | 4 | 5 | 6 | 7 | 8 |
| MOULDED PATTERN | | | | | | | | |
| SURFACE SMOOTHNESS | D | E | F | E | E | F | D | E |
| BLACK SMOKE / SOOT PRODUCTION | G | A | A | A | A | A | G | G |

In Tables 1 and 2 the molecular weight is the weight average molecular weight determined by gel permeation chromatography using polystyrene as a standard.

The letters A to G in the results in the tables denote as follows:-

A - none

B - great

C - small

D - good

E - many wrinkles

F - large depressions

G - large amount

The expandable resin grains of Examples 1 - 7 in Table 1 were subjected to expendable pattern casting tests, the results being noted below.

Expandable polystyrene (High Beads HCF-5000 manufactured by Hitachi Kasei Kogyo KK) was used for comparison.

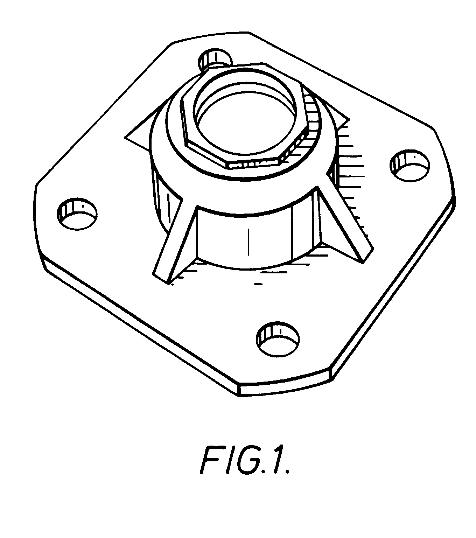

The expandable resin grains of Examples 1 - 7 were screened to give the range 26 mesh (0.60 mm) and were preexpanded to 45 ml/g. After ageing for 24 hours at a temperature of 20 - 25°C expendable patterns (168 mm x 168 mm, volume 520 cm$^3$) for valve bonnets as used for connection parts of service water piping shown in perspective in Figure 1 of the accompanying drawings were moulded. These expendable patterns were compared when used for producing iron castings.

Casting was effected at 1450 - 1470°C using ductile cast iron (carbon 3.55, silicon 2.4, magnesium 0.04, manganese 0.2%). Casting evaluations were made three times each for Example 1 and for expandable polystyrene (HFC-50000).

The results were that in the case of the iron castings that were cast using expandable polystyrene (HFC-5000) for the expendable patterns adhesion of carbon was found on the surfaces of all three of the castings and also carbon had penetrated into the interior of the iron. In contrast, with the iron castings that were cast using the expandable resin grains of Examples 1 - 7 for the expendable patterns, no adhesion of carbon was found on the surface of any of the three castings and there was no penetration of carbon into the interior of the iron. Further, a comparison of the surfaces of the castings produced showed that whereas the surfaces of the castings for which expandable polystyrene (HFC-5000) was used were very rough, the surfaces of the castings for which Examples 1 - 7 were used were smooth and free of bumps and depressions. It is possible that the roughness of the surfaces of the castings occurred because gas resulting from decomposition of the resin remained and consequently proper filling by the iron melt failed to be effected. It is possible that since the expandable resin grains of Examples 1 - 7 have a better thermal degradation characteristic than expandable polystyrene, they are more easily vaporized and consequently filling by the molten metal proceeded readily simultaneously with occurrence of essentially complete thermal degradation of the resin and so no bumps or depressions were produced on the surfaces of the castings. Further there was no phenomenon of blow-back of molten metal due to gases of pyrolysis as is found when using expendable patterns of expanded polymethyl methacrylate.

Example 8

An expanded thermoplastics pattern for a valve bonnet casting weighing 3.7 kg and having dimension 168 x 168 x 80 mm and average section thickness of 15 mm, was moulded to a density of 0.020 to 0.021 g/cm$^3$ using expanded polystyrene (HFC-5000). A second pattern for the same casting was moulded in an expanded copolymer produced from a mixture of monomers containing 30% by weight of methyl methacrylate and 70% by weight styrene.

Both patterns were attached using a proprietary hot melt adhesive (CORFIX 600) to gates 15 mm in height and of 8 x 40 mm cross-sectional area. These were in turn attached to opposite ends of a runner bar of dimensions 140 x 40 x 40 mm. The gates and runner bar were cut from a moulded block of density 0.020 g/cm$^3$ of a proprietary grade of polystyrene bead, BASF 455 (manufactured by BASF).

The assembly was coated with a proprietary water based, non-insulating, medium permeability, refractory coating (STYROMOL 142.06) and dried at 45°C. An integral refractory fibre-based pouring cup and downsprue of height 600 mm was attached to the centre of the runner bar, and the complete assembly was placed in a casting box, and surrounded with unbonded silica sand, which was compacted by vibration.

Molten ductile iron of composition 3.74% C, 0.01% S, 2.20% Si, 0.19% Mn and 0.039% Mg was poured into the pouring cup at a temperature of 1472°C. The resulting castings were allowed to cool, removed from the sand, lightly shot blasted and examined for defects.

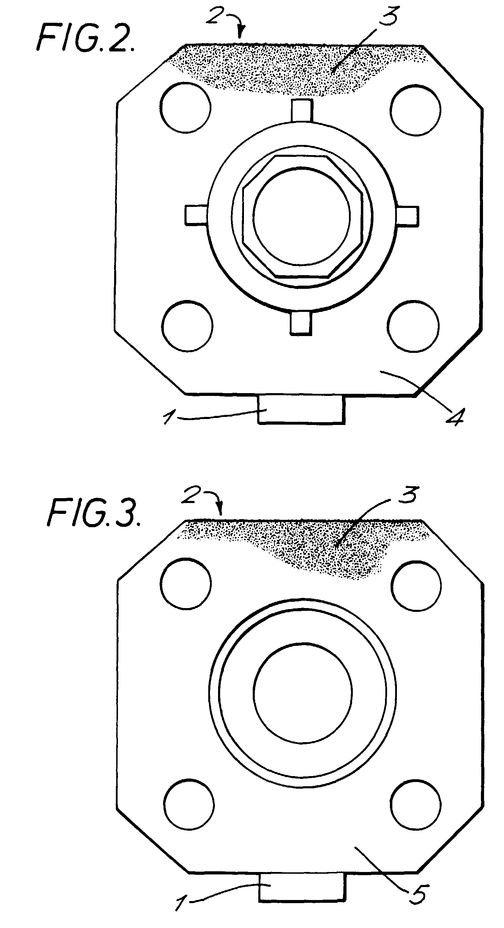

The results are illustrated in the accompanying drawings in which Figure 2 is a front elevation of the casting produced from the expanded polystyrene pattern and Figure 3 is a rear elevation of the same casting. In the drawings 1 is the gate located at the base of the casting, 2 indicates the top of the casting, 3 indicates the shaded areas which had a rough, defective surface, 4 indicates the front of the casting and 5 indicates the rear of the casting. The casting produced from the pattern made from a copolymer produced by polymerising 30% by weight methyl methacrylate and 70% by weight styrene was completely free from surface defects.

The above procedure was repeated and equivalent results were obtained.

## Claims

1. An expandable resin composition produced by impregnating a copolymer with a volatile blowing agent characterised in that the copolymer has a weight average molecular weight of 150,000 to 350,000 and is produced by copolymerisation of 55 - 85% by weight of styrene monomer and 15 - 45% by weight of a methacrylic acid ester monomer having the general formula $CH_2 = C(CH_3)COOR$ (where R represents a 1 - 4 carbon atom alkyl group), and the volatile blowing agent is present in an amount of up to 10% by weight based on the total weight of monomers.

2. An expandable resin composition according to Claim 1 characterised in that the copolymer is produced by copolymerisation of 60 - 80% by weight styrene monomer and 20 - 40% by weight of a methacrylic acid ester monomer.

3. An expandable resin composition according to Claim 1 or Claim 2 characterised in that R is a methyl, ethyl, n-propyl, iso-propyl, n-butyl, sec-butyl, tert-butyl or iso-butyl group.

4. An expandable resin composition according to any one of Claims 1 to 3 characterised in that polymerisation of the monomers is carried out in the presence of an organic peroxide as polymerisation initiator.

5. An expandable resin composition according to Claim 4 characterised in that the organic peroxide is lauroyl peroxide, benzoyl peroxide, t-butylperoxy (2-ethylhexanoate), t-butylperoxybenzoate, t-butylperoxypivalate, 1, 1-di-t-butylperoxy-3, 3, 5-trimethylcyclohexane, di-t-butylperoxyhexahydroterephthalate, di-t-butylperoxytrimethyladipate or di-t-butylperoxyisophalate.

6. An expandable resin composition according to any one of Claims 1 to 5 characterised in that polymerisation of the monomers is carried out in the presence of n-dodecylmercaptan, n-octylmercaptan, n-butylmercaptan or tert-butylmercaptan.

7. An expandable resin composition according to Claim 6 characterised in that the mercaptan is present in an amount of up to 1 mol % relative to the monomers.

8. An expandable resin composition according to any one of Claims 1 to 7 characterised in that the volatile blowing agent is pentane.

9. An expandable resin composition according to Claim 8 characterised in that an additional volatile blowing agent selected from aliphatic hydrocarbons, alicyclic hydrocarbons and aliphatic hydrocarbon halides is present.

10. An expandable resin composition according to Claim 9 characterised in that the additional volatile blowing agent is propane, butane, hexane, petroleum ether, cyclohexane, methylene chloride, trichlorotrifluoroethane or dichlorodifluoroethane.

11. An expandable resin composition according to any one of Claims 1 to 10 characterised in that a plasticiser is present.

12. An expandable resin composition according to Claim 11 characterised in that the plasticiser is ethylbenzene, toluene, xylene, 1, 2-dichloropropane, trichloroethylene or perchloroethylene.

**13.** An expandable resin composition according to Claim 11 or 12 characterised in that the plasticiser is present in an amount of up to 5% by weight relative to the copolymer.

**14.** An expanded thermoplastics pattern for metal casting produced by expanding and forming to a desired shape an expandable resin composition characterised in that the expandable resin composition is an expandable resin composition according to Claim 1.

**15.** A method of producing a metal casting in which an expanded thermoplastics pattern is surrounded by particulate refractory material and molten metal is poured on to the pattern so as to degrade the pattern and form the casting on solidification of the metal as a replica of the pattern characterised in that the pattern is a pattern according to Claim 14.

**16.** A method according to Claim 15 characterised in that the pattern is coated with a refractory coating.

**Patentansprüche**

**1.** Schäumbare Harzzusammensetzung, hergestellt durch Imprägnierung eines Copolymers mit einem flüchtigen Treibmittel, dadurch gekennzeichnet, daß das Copolymer ein gewichtsmittleres Molekulargewicht von 150.000 bis 350.000 aufweist und durch Copolymerisation von 55-85 Gew.-% Styrolmonomer und 15-45 Gew.-% Methacrylsäureestermonomer der allgemeinen Formel $CH_2=C\ (CH_3)\ COOR$ (wo R für eine Alkylgruppe mit 1-4 Kohlenstoffatomen steht) hergestellt wird und das flüchtige Treibmittel in einer Menge von bis zu 10 Gew.-%, bezogen auf das Gesamtgewicht der Monomeren, vorliegt.

**2.** Schäumbare Harzzusammensetzung nach Anspruch 1, dadurch gekennzeichnet, daß das Copolymer durch Copolymerisation von 60-80 Gew.-% Styrolmonomer und 20-40 Gew.-% Methacrylsäureestermonomer hergestellt wird.

**3.** . Schäumbare Harzzusammensetzung nach Anspruch 1 oder 2, dadurch gekennzeichnet, daß R eine Methyl-, Ethyl-, n-Propyl-, Isopropyl-, n-Butyl-, sek.-Butyl-, tert.-Butyl- oder Isobutylgruppe ist.

**4.** Schäumbare Harzzusammensetzung nach einem der Ansprüche 1 bis 3, dadurch gekennzeichnet, daß die Polymerisation der Monomeren in Gegenwart eines organischen Peroxids als Polymerisationsinitiator erfolgt.

**5.** Schäumbare Harzzusammensetzung nach Anspruch 4, dadurch gekennzeichnet, daß als organisches Peroxid Lauroylperoxid, Benzoylperoxid, t-Butylperoxy- (2-ethylhexanoat), t-Butylperoxybenzoat, t-Butylperoxypivalat, 1,1-Di-t-butylperoxy-3,3,5-trimethylcyclohexan, Di-t-butylperoxyhexahydroterephthalat, Di-t-butylperoxytrimethyladipat oder Di-t-butylperoxyisophthalat vorliegt.

**6.** Schäumbare Harzzusammensetzung nach einem der Ansprüche 1 bis 5, dadurch gekennzeichnet, daß die Polymerisation der Monomeren in Gegenwart von n-Dodecylmerkaptan, n-Octylmerkaptan, n-Butylmerkaptan oder tert.-Butylmerkaptan erfolgt.

**7.** Schäumbare Harzzusammensetzung nach Anspruch 6, dadurch gekennzeichnet, daß das Merkaptan in einer Menge von bis zu 1 Mol-%, bezogen auf die Monomeren, vorliegt.

**8.** Schäumbare Harzzusammensetzung nach einem der Ansprüche 1 bis 7, dadurch gekennzeichnet, daß das flüchtige Treibmittel Pentan ist.

**9.** Schäumbare Harzzusammensetzung nach Anspruch 8, dadurch gekennzeichnet, daß ein zusätzliches, unter aliphatischen Kohlenwasserstoffen, alizyklischen Kohlenwasserstoffen und aliphatischen Kohlenwasserstoffhalogeniden ausgewähltes flüchtiges Treibmittel vorhanden ist.

**10.** Schäumbare Harzzusammensetzung nach Anspruch 9, dadurch gekennzeichnet, daß als zusätzliches flüchtiges Treibmittel Propan, Butan, Hexan, Petrolether, Cyclohexan, Methylenchlorid, Trichlortrifluorethan oder Dichlordifluorethan vorliegt.

**11.** Schäumbare Harzzusammensetzung nach einem der Ansprüche 1 bis 10, dadurch gekennzeichnet, daß ein Weichmacher vorhanden ist.

12. Schäumbare Harzzusammensetzung nach Anspruch 11, dadurch gekennzeichnet, daß als Weichmacher Ethylbenzol, Toluol, Xylol, 1,2-Dichlorpropan, Trichlorethylen oder Perchlorethylen vorliegt.

13. Schäumbare Harzzusammensetzung nach Anspruch 11 oder 12, dadurch gekennzeichnet, daß der Weichmacher in einer Menge von bis zu 5 Gew.-%, bezogen auf das Copolymer, vorliegt.

14. Geschäumtes Thermoplastikmodell zum Metallguß, hergestellt durch Schäumen und Formen einer schäumbaren Harzzusammensetzung zu einer gewünschten Gestalt, dadurch gekennzeichnet, daß die schäumbare Harzzusammensetzung eine solche nach Anspruch 1 ist.

15. Verfahren zur Herstellung eines Metallgußstücks, wobei man ein geschäumtes Thermoplastikmodell mit teilchenförmigem feuerfestem Material umgibt und schmelzflüssiges Metall auf das Modell gießt, um dieses abzubauen und das Gußstück bei der Erstarrung des Metalls als Reproduktion des Modells zu bilden, dadurch gekennzeichnet, daß das Modell ein solches nach Anspruch 14 ist.

16. Verfahren nach Anspruch 15, dadurch gekennzeichnet, daß das Modell mit einem feuerfesten Überzug beschichtet wird.

**Revendications**

1. Composition de résine expansible produite par imprégnation d'un copolymère avec un agent gonflant volatil, caractérisée en ce que le copolymère possède une masse moléculaire moyenne en poids de 150 000 à 350 000 et qu'il est produit par copolymérisation de 55 - 85% en poids d'un monomère styrène et de 15 - 45% en poids d'un monomère ester d'acide méthacrylique répondant à la formule générale $CH_2=C(CH_3)COOR$ (où R représente un groupe alkyle de 1 à 4 atomes de carbone), et en ce que que l'agent gonflant volatil est présent à raison de jusqu'à 10% en poids, par rapport au poids total des monomères.

2. Composition de résine expansible selon la revendication 1, caractérisée en ce que le copolymère est produit par copolymérisation de 60 - 80% en poids d'un monomère styrène et de 20 - 40% en poids d'un monomère ester d'acide méthacrylique.

3. Composition de résine expansible selon la revendication 1 ou la revendication 2, caractérisée en ce que R représente un groupe méthyle, éthyle, n-propyle, iso-propyle, n-butyle, s-butyle, t-butyle ou iso-butyle.

4. Composition de résine expansible selon l'une quelconque des revendications 1 à 3, caractérisée en ce que la polymérisation des monomères est réalisée en présence d'un peroxyde organique, en tant qu'initiateur de polymérisation.

5. Composition de résine expansible selon la revendication 4, caractérisée en ce que le peroxyde organique est le peroxyde de lauroyle, le peroxyde de benzoyle, le peroxy-(2-éthylhexanoate) de t-butyle, le peroxybenzoate de t-butyle, le peroxypivalate de t-butyle, le 1,1-di-t-butylperoxy-3,3,5-triméthylcyclohexane, le peroxyhexahydrotéréphtalate de di-t-butyle, le peroxytriméthyladipate de di-t-butyle ou le peroxyisophtalate de di-t-butyle.

6. Composition de résine expansible selon l'une quelconque des revendication 1 à 5, caractérisée en ce que la polymérisation des monomères est réalisée en présence de n-dodécylmercaptan, de n-octylmercaptan, de n-butylmercaptan ou de t-butylmercaptan.

7. Composition de résine expansible selon la revendication 6, caractérisée en ce que le mercaptan est présent en une proportion allant jusqu'à 1% en moles, par rapport aux monomères.

8. Composition de résine expansible selon l'une quelconque des revendications 1 à 7, caractérisée en ce que l'agent gonflant volatil est le pentane.

9. Composition de résine expansible selon la revendication 8, caractérisée en ce qu'un agent gonflant volatil supplémentaire choisi parmi les hydrocarbures aliphatiques, les hydrocarbures alicycliques et les halogénures d'hydrocarbures aliphatiques est présent.

10. Composition de résine expansible selon la revendication 9, caractérisée en ce que l'agent gonflant volatil supplémentaire et le propane, le butane, l'hexane, l'éther de pétrole, le cyclohexane, le chlorure de méthylène, le trichlorotrifluoroéthane ou le dichlorodifluoroéthane.

11. Composition de résine expansible selon l'une quelconque des revendications 1 à 10, caractérisée en ce qu'un plastifiant est présent.

12. Composition de résine expansible selon la revendication 11, caractérisée en ce que le plastifiant est l'éthylbenzène, le toluène, le xylène, le 1,2-dichloropentane, le trichloroéthylène ou le perchloroéthylène.

13. Composition de résine expansible selon la revendication 11 ou 12, caractérisée en ce que le plastifiant est présent en une proportion allant jusqu'à 5% en poids, par rapport au copolymère.

14. Modèle en matière thermoplastique expansée pour le coulage d'un métal produit par expansion et façonnage en une forme voulue d'une composition de résine expansible, caractérisé en ce que la composition de résine expansible est une composition de résine expansible selon la revendication 1.

15. Procédé de production d'un moulage métallique, dans lequel un modèle en matière thermoplastique expansée est entouré par un matériau réfractaire particulaire et un métal fondu est versé sur le modèle pour décomposer le modèle et former le moulage par solidification du métal comme réplique du modèle, caractérisé en ce que le modèle est un modèle selon la revendication 14.

16. Procédé selon la revendication 15, caractérisé en ce que le modèle est recouvert d'un revêtement réfractaire.

FIG.1.

FIG.2.

FIG.3.